# EUROPEAN PATENT SPECIFICATION

(11) **EP 3 701 547 B1**
(45) Date of publication and mention of the grant of the patent: **19.04.2023**
(21) Application number: 18870123.9
(22) Date of filing: 24.10.2018
(51) Int. Cl.: B23K 35/28, H01R 9/16, H01R 9/22, H01R 13/52, H01J 5/32, H01J 5/46

(54) **ELECTRICAL CONNECTOR WITH CERAMIC INSULATOR AND ALUMINUM SLEEVE AND METHOD FOR MANUFACTURING SAME**
ELEKTRISCHER VERBINDER MIT KERAMISCHEM ISOLATOR UND ALUMINIUMHÜLSE SOWIE VERFAHREN ZU SEINER HERSTELLUNG
CONNECTEUR ÉLECTRIQUE À ISOLANT CÉRAMIQUE ET MANCHON EN ALUMINIUM ET SON PROCÉDÉ DE FABRICATION

(30) Priority: 24.10.2017 US 201762576083 P
(43) Date of publication of application: 02.09.2020
(73) Proprietor: Watlow Electric Manufacturing Company, St. Louis, MO 63146 (US)
(72) Inventor: ELLIOT, Brent, Cupertino CA 95014 (US); HUSSEN, Guleid, San Francisco CA 94122 (US); PARKER, Michael, Brentwood CA 94513 (US); REX, Dennis, Williams OR 97544 (US); STEPHENS, Jason, San Francisco CA 94131 (US)
(74) Representative: Boult Wade Tennant LLP
(86) International application number: PCT/US2018/057414
(87) International publication number: WO 2019/084210

(56) References cited:
- WO-A2-2013/082564
- DE-A1- 1 490 333
- JP-A- 2005 135 727
- JP-A- 2006 324 229
- US-A- 4 231 003
- US-A- 5 088 329
- US-A1- 2015 325 400
- US-A1- 2016 184 912
- US-A1- 2016 314 886

## Description

### FIELD OF THE INVENTION

This invention relates to electrical connectors, and more specifically to electrical connectors for use with vacuum chambers.

### BACKGROUND OF THE INVENTION

Electrical feedthroughs are commonly used to transfer electrical power and signals between a device within a vacuum chamber and equipment positioned outside the vacuum chamber. For example, some devices in a vacuum chamber, such as thermal evaporation sources or substrate heaters, need electrical power from the exterior of the vacuum chambers. In addition, some devices in vacuum chambers, such as temperature sensors or measurement devices, have to send signals to equipment outside of the vacuum chambers for analysis.

An electrical feedthrough for these environments is generally an airtight passage mounted on the wall of a vacuum chamber. One or more conductors may be provided in an electrical feedthrough. Each conductor is surrounded by insulators to keep it insulated from the wall of the chamber. The insulators may be glass or ceramic materials.

Some electric feedthroughs have glass-to-metal seals with pin contacts used with standard connectors. Some other approaches use ceramic-metal brazed pins mounted on metal flanges. Many electric feedthroughs use Kovar in an attempt to match the coefficient of thermal expansion of the metallic of the ceramic insulator. Kovar has distinct disadvantages with regard to welding, including the likelihood that expensive e-beam welding must be used.

In other applications, a metal conduit tube, which may be aluminum, is needed to be hermetically joined to a ceramic structure, such as a plug. The metal tube allows for the joining sheathed item, such as a power or telemetry lead, to have it sheath hermetically joined to the metal tube, while routing the lead through a hermetic sealed passageway through the ceramic.

US 4,231,003 describes a shield-type coaxial vacuum feedthrough for connecting an external wire to electric equipment inside a vacuum vessel. Hollow metal cylinders, which are made of Kovar, are used for this feedthrough. WO 2013/082564 describes a method for joining ceramic pieces with a brazing element comprising aluminum in a controlled atmosphere.

What is needed is an electric feedthrough which uses material with a good match of thermal expansion to a ceramic insulator and which is able to be manufactured inexpensively. The present invention provides an electrical feedthrough for use with a vacuum chamber as set out in claim 1 and a method for making an insulated electrical feedthrough or electrical termination unit as set out in claim 10.

### BRIEF DESCRIPTION OF THE DRAWINGS

FIG. 1 is a perspective view of an electrical feedthrough of the prior art.
FIG. 2 is a cross-sectional view of an electrical feedthrough of the prior art.
FIG. 3 is a cross-section view of an electrical feedthrough of the prior art.
FIG. 4 is a perspective view of a brazing assembly of an embodiment of the present invention.
FIG. 5 is an end view of the brazing assembly of FIG. 4.
FIG. 6 is a cross-sectional view of the brazing assembly of FIG. 4 taken along the line 6-6 of FIG. 5.
FIG. 7 is an end view of a post-brazing assembly of an embodiment of the present invention.
FIG. 8 is a cross-sectional view of the post-brazing assembly of FIG. 7 taken along the line 8-8 of FIG. 7.

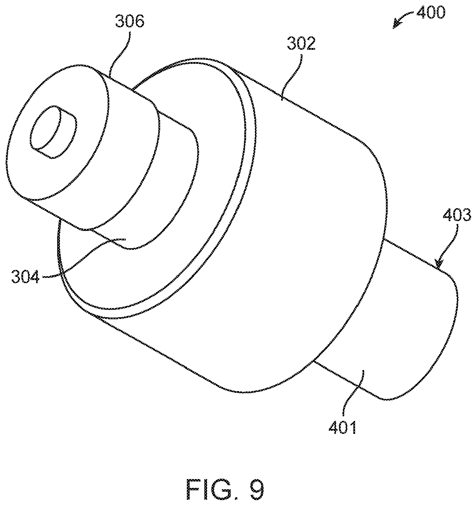

FIG. 9 is a perspective view of the post-brazing assembly of FIG. 7.
FIG. 10 is a cross-sectional view of an electrical termination feedthrough of an embodiment of the present invention.
FIG. 11 is a cross-sectional view of an electrical termination feedthrough of an embodiment of the present invention.
FIG. 12 is a cross-sectional view of a first manufacturing step of a feedthrough of an embodiment of the present invention.
FIG. 13 is a cross-sectional view of a second manufacturing step of a feedthrough of an embodiment of the present invention.
FIG. 14 is a cross-sectional view of a third manufacturing step of a feedthrough of an embodiment of the present invention.
FIG. 15 is a cross-sectional view of a fourth manufacturing step of a feedthrough of an embodiment of the present invention.
FIG. 16 is a cross-sectional view of a fifth manufacturing step of a feedthrough of an embodiment of the present invention.

### DETAILED DESCRIPTION OF THE INVENTION

An electrical connector for use with a vacuum chamber is provided. The electrical connector can include an electrical feedthrough and a termination unit. The electrical connector includes a ceramic body, having a first end and a second end. A bore or hole extends through the first end and is formed by an inner surface of the ceramic body. A hollow aluminum structure is provided and has a first portion extending into the bore. The hollow aluminum structure is brazed, to the inner surface of the ceramic body to form a hermetic seal between the hollow aluminum structure and the ceramic body. The hollow aluminum structure has a second portion extending from the ceramic body. At least one electrical conductor is provided and has a first end portion extending through the hollow aluminum structure and a second end portion extending to the second end of the ceramic body.

The electrical connector can optionally include a metal end cap joined to the second end of the ceramic body. The second end portion of the electrical conductor can optionally be joined to the end cap. An electrical connector can optionally be provided in which the second end of the ceramic body is provided with an additional bore extending therethrough and communicating with the first-named bore. The second end portion of the electrical conductor can optionally be joined to the second end of the ceramic body within the additional bore.

The aluminum of the hollow aluminum structure can be of any suitable weight. For example, the aluminum may optionally be aluminum of greater than 89% by weight. The aluminum may optionally be aluminum of greater than 92% by weight. The aluminum may optionally be aluminum of greater than 98% by weight. The aluminum may optionally be aluminum of greater than 99% by weight. The aluminum may optionally be aluminum of greater than 99.5% by weight. The aluminum may optionally be aluminum of greater than 99.99% by weight. The aluminum may optionally be referred to as metallic aluminum or a metal comprising aluminum.

A method for the making an electrical connector is provided. The electrical connector can be an electrical feedthrough or an electrical termination unit. The method includes providing a ceramic piece have a first end and a second end. A bore or hole extends into the ceramic piece from the first end and is formed from an inner surface. The method includes putting or placing aluminum into the hole. The method includes joining the aluminum to the inner surface of the bore or hole by brazing the aluminum in the bore or hole, to create an aluminum structure within the hole that is hermetically joined with the inner surface of the hole. The aluminum structure includes a central portion. The method includes removing the central portion of the aluminum structure to create a passageway or bore through the aluminum structure. The method includes removing a portion of the ceramic piece around the aluminum structure at the first end. The removing step includes exposing an outer surface of a portion of the aluminum structure. The method results in a hollow aluminum structure hermetically joined to the inner surface of the ceramic piece and extending from the first end of the ceramic piece.

The method includes providing at least one electrical conductor extending through the hollow aluminum structure. The at least one electrical conductor is electrically isolated from the hollow aluminum structure. The ceramic piece can optionally be annular. The method can optionally include joining, for example brazing, an end cap to the second end of the annular ceramic piece. The method can optionally include joining an end of the at least one electrical conductor to the end cap. The aluminum structure can optionally be an aluminum rod. The hollow aluminum structure can optionally be an aluminum tube.

The aluminum can be brazed to the inner surface of the bore or hole by being heated to any suitable temperature. For example, the aluminum can optionally be heated to a temperature of at least 770C, or greater. The aluminum can optionally be heated to a temperature of at least 800C, or greater. The aluminum can optionally be heated to a temperature in the range of 770C to 1200C. The aluminum can optionally be heated to a temperature in the range of 1100C. The aluminum can optionally be heated to a temperature in the range of 800C to 1200C.

The joining atmosphere, that is the atmosphere for brazing, the aluminum to the inner surface of the bore or hole, can be of any suitable type. For example, the joining atmosphere can optionally be non-oxygenated. The joining may optionally occur in any suitable vacuum, for example in a vacuum with a pressure lower than 0.133Pa (1 x 10E-4 Torr), in a vacuum with a pressure lower than 0.013Pa (1 x 10E-5 Torr) or in a vacuum with a pressure lower than 0.067Pa (5 x 10E-5 Torr). Further oxygen removal can optionally be achieved with the placement of zirconium or titanium in the process chamber. For example, a zirconium inner chamber may optionally be placed around the pieces which are to be joined. Atmospheres other than vacuum may optionally be used to achieve a hermetic seal. For example, an argon (Ar) atmosphere may optionally be used to achieve hermetic joints. Other noble gasses can optionally be used to achieve hermetic joints. A hydrogen (H2) atmosphere may optionally be used to achieve hermetic joints.

The aluminum of the method can be of any suitable type and form. For example, the aluminum may optionally be a powder or a foil. For example, the aluminum may optionally be aluminum of greater than 89% by weight. The aluminum may optionally be aluminum of greater than 92% by weight. The aluminum may optionally be aluminum of greater than 98% by weight. The aluminum may optionally be aluminum of greater than 99% by weight. The aluminum may optionally be aluminum of greater than 99.5% by weight. The aluminum may optionally be aluminum of greater than 99.99% by weight. The aluminum may optionally be referred to as metallic aluminum or a metal comprising aluminum.

The ceramic body may be formed from any suitable ceramic. For example, the ceramic may optionally be of a non-diffusable type, such as aluminum nitride, alumina, beryllium oxide, or zirconia. The ceramic piece may optionally be of mono-crystalline or poly-crystalline aluminum nitride. The ceramic piece may optionally be selected from a group consisting of aluminum nitride, poly-crystalline alumina, mono-crystalline alumina or sapphire, beryllium oxide, and zirconia, which is a group which demonstrates non-diffusability by aluminum.

A hermetic joint in accord with embodiments of the present invention can optionally be a joint with a leak rate < 1×10⁻⁹sccm of He.

An electrical termination unit or feedthrough which may be used for routing electrical conductors through a chamber wall, or otherwise across a barrier between isolated atmospheric conditions, is provided. The electrical termination unit or feedthrough has aluminum as an interface material and utilizes a ceramic insulator. The electrical termination unit or feedthrough has the aluminum brazed directly to a ceramic surface of the insulator. The aluminum is formed within a hollow ceramic tube in the same process step that brazes the aluminum to the ceramic tube with a hermetic joint. Optionally machining subsequent to the brazing of the aluminum to the ceramic insulator may allow for achievement of the final form desired. A method for manufacturing such an electrical termination or feedthrough unit is provided.

The embodiments of the invention set forth herein, for example below, are examples of the invention, and may in some instances be broader or narrower than the foregoing discussion of the invention but are not intended to limit the breadth of the invention.

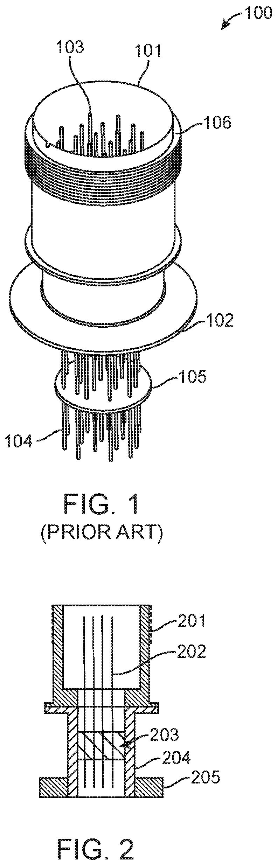

FIG. 1 is an illustrative example of a prior art electrical feedthrough 100. Passing of electrical signals via feedthroughs which pass through vessel walls is a common requirement. Such feedthroughs have as basic requirements the ability to withstand necessary operating pressures, environments, and temperatures, while electrically isolating the needed electrical signals from the vessel wall. Feedthroughs utilized in vacuum systems typically are required to operate with a 1 ATM pressure differential with leak rates <1×10⁻⁹sccm of He, and temperatures of several hundred degrees Celsius, while passing signals which can include power, radio frequency, instrumentation, and others. Other types of applications such as chemical processing, oil & gas applications and others may require different operating specifications such as higher pressures, temperatures, and chemical compatibility.

The electrical feedthrough 100 may have a first end 101 adapted to couple to an electrical cable with a cabling connector 106. Connector pins 103 may reside within the first end 101. A second end 102 may include electrical conductors 104 which may be separated by an insulator 105.

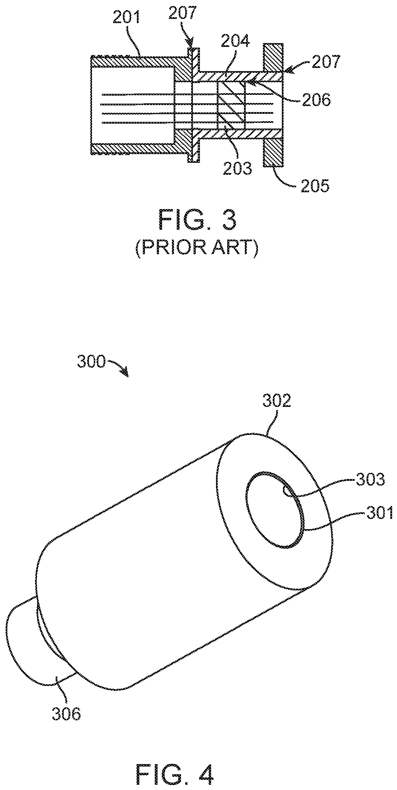

FIGS. 2 and 3 are figurative cross-sectional views of a prior art electrical feedthrough which includes a Kovar housing. A ceramic part 203, for example aluminum oxide, is used for electrical insulation with a plurality of electrical conductors 202 brazed into the ceramic. Conductors 202 may be conductor pins, for example of nickel or copper. The outer edge of the ceramic insulator 203 is brazed into a Kovar tabulation or housing 204 - Kovar is used to match the thermal expansion of the ceramic - and the Kovar is then welded to another metal 201, such as a stainless steel cabling housing 201 used as the connection to a vessel, and metal 205, such as a stainless steel vacuum vessel connector 205 to cabling carrying the electrical signals. Each of metals 201 and 205 may be a stainless steel alloy such as 303, 304, or 316.

There are several drawbacks with design and manufacturing of the electrical feedthroughs shown in FIGS. 2 and 3. These drawbacks relate to the use of Kovar as the housing for the alumina ceramic insulator. Kovar is used to match the CTE of the ceramic. During manufacturing, the alumina insulator is brazed to the Kovar. Brazing is typically done using a moly-manganese layer 206 on the alumina with a copper-silver brazing alloy, which is done at temperatures over 800C. If a housing other than Kovar is used, the resulting stresses for the mismatch of the low CTE alumina and the high CTE metal will result in cracking of the ceramic. Kovar also has some undesirable characteristics. It lacks mechanical properties to make it a good connector for either the cabling or the vessel. It cannot be easily welded - welding it to stainless steel, which has the properties needed for good connectors, requires the use of e-beam welding in a few locations 207, which is expensive and slow. And Kovar itself is expensive, with limited supply.

In contrast to the above-mentioned designs, electrical connectors, for example electrical feedthroughs and electrical termination units, according to the present invention allow for the brazing or other joining of metal directly to the ceramic, without the use of Kovar and without the use of other materials as a wetting agent, such as moly-manganese. A ceramic insulator can optionally be fashioned with a hollow portion which allows for the insertion of aluminum into the hollow portion. The aluminum may optionally be inserted as a powder, a foil, or other form. The aluminum is then brazed to the interior surface of the hollow portion of the ceramic insulator with a hermetic joint. The ceramic may be of any suitable type, for example of a non-diffusable type, such as aluminum nitride, alumina, beryllium oxide, or zirconia.

An electrical termination for a heater element can optionally be provided, and may optionally include a metal tube hermetically embedded in a ceramic plug. The heater element lead may optionally be sheathed to protect the lead against corrosive process chemistries which may be present in a process chamber, or for other reasons. An aluminum tube hermetically embedded in a ceramic plug allows for the sheath of the heater element lead to be hermetically joined to the aluminum tube, thus continuing the protection of the sheathed element into the ceramic plug. The ceramic can also provide electrical isolation of the sheath from the conductor within.

The joining process can optionally be performed in a process chamber adapted to provide very low pressures. Joining processes according to embodiments of the present invention may optionally require an absence of oxygen in order to achieve a hermetically sealed joint. The process can optionally be performed at a pressure lower than 0.133Pa (1 x 10E-4 Torr). The process can optionally be performed at a pressure lower than 0.013Pa (1 x 10E-5 Torr). Further oxygen removal can optionally be achieved with the placement of zirconium or titanium in the process chamber. For example, a zirconium inner chamber may be placed around the pieces which are to be joined.

In some embodiments, atmospheres other than vacuum may be used to achieve a hermetic seal. In some embodiments, argon (Ar) atmosphere may be used to achieve hermetic joints. In some embodiments, other noble gasses are used to achieve hermetic joints. In some embodiments, hydrogen (H2) atmosphere may be used to achieve hermetic joints.

The wetting and flow of the brazing layer, and the creation of a hermetic joint or seal, may be sensitive to a variety of factors. The factors of concern can include the braze material composition, the ceramic composition, the susceptibility of the ceramic to diffusion by aluminum, the chemical makeup of the atmosphere in the process chamber, especially the level of oxygen in the chamber during the joining process, the temperature, the time at temperature, the thickness of the braze material, the surface characteristics of the material to be joined, the geometry of the pieces to be joined, the physical pressure applied across the joint during the joining process, and/or the joint gap maintained during the joining process. A hermetic joint in accord with embodiments of the present invention can optionally be a joint with a leak rate < 1x10-9sccm of He.

An example of a brazing method for joining aluminum to the interior surface of a hollow ceramic insulator may optionally include the steps of filling the insulator with a brazing material selected from the group consisting of aluminum and an aluminum alloy disposed between the first and second ceramic objects, heating the brazing layer to a temperature of at least 800C, and cooling the brazing layer to a temperature below its melting point so that the brazing layer hardens and creates a hermetic seal so as to join the first member to the second member. Another example of a brazing method for joining aluminum to the interior surface of a hollow ceramic insulator, wherein for example the ceramics are of a group consisting of aluminum nitride, alumina, beryllium oxide, and zirconia, may optionally include the steps of filling the insulator with a brazing material selected from the group consisting of aluminum and an aluminum alloy disposed between the first and second ceramic objects, heating the brazing layer to a temperature of at least 770C, and cooling the brazing layer to a temperature below its melting point so that the brazing layer hardens and creates a hermetic seal so as to join the first member to the second member. The brazing temperature may optionally be in the range of 770C to 1200C. Various geometries of braze joints may be implemented according to methods described herein.

A joining process of the present invention may comprise some or all of the following steps. A ceramic can optionally be a piece selected for brazing. The ceramic piece can optionally have a cavity, which may be a cylindrical hole into the ceramic. The cylindrical hole can optionally be in the axial center of the ceramic. The ceramic pieces may optionally be of alumina. The ceramic piece may optionally be of mono-crystalline or poly-crystalline aluminum nitride. The ceramic piece may optionally be selected from a group consisting of aluminum nitride, poly-crystalline alumina, mono-crystalline alumina or sapphire, beryllium oxide, and zirconia, which is a group which demonstrates non-diffusability by aluminum. Other ceramics may be in this group. In an illustrative example, as seen in FIG. 4, the interior surface 303 of the hollow center of a ceramic tube 302 may optionally be filled with a brazing material 301. The joining material may be a brazing material comprising aluminum. The brazing material may optionally be a commercially available aluminum foil of >99% aluminum content. The brazing material may optionally be aluminum of greater than 98% by weight. The aluminum may optionally be greater than 99.99% aluminum by weight. The brazing material may optionally consist of a plurality of layers of foil in some embodiments.

The oven may optionally be evacuated to a pressure of less than 0.067Pa (5 x 10E-5 Torr). In some aspects, vacuum removes the residual oxygen. A vacuum of lower than 0.013Pa (1 x 10E-5 Torr) can optionally be used. The pre-assembly can optionally be placed within a zirconium inner chamber which acts as an oxygen attractant, further reducing the residual oxygen which might have found its way towards the joint during processing. The process oven can optionally be purged and re-filled with pure, dehydrated noble gas, such as argon gas, to remove the oxygen. The process oven can optionally be purged and re-filled with purified hydrogen to remove the oxygen.

The pre-assembly can optionally then be subjected to increases in temperature, and a hold at the joining temperature. Upon initiating the heating cycle, the temperature may optionally be raised slowly, for example 15C per minute to 200C and then 20-30C per minute thereafter, to standardized temperatures, for example, 600C and the joining temperature, and held at each temperature for a fixed dwell time to allow the vacuum to recover after heating, in order to minimize gradients and/or for other reasons. When the braze temperature has been reached, the temperature can optionally be held for a time to effect the braze reaction. The dwell temperature may optionally be 850C and the dwell time may optionally be 30 minutes. The dwell temperature may optionally be 800C and the dwell time may optionally be 2 hours. The dwell temperature may optionally be 1000C and the dwell time may optionally be 15 minutes. The dwell temperature may optionally be 1150C and the dwell time may optionally be 30-45 minutes. The dwell temperature may optionally not exceed a maximum of 1200C. The dwell temperature may optionally not exceed a maximum of 1300C. The dwell temperature may optionally be in the range of 770C and 1200C. The dwell temperature may optionally be in the range of 800C and 1200C. Upon achieving sufficient braze dwell time, the furnace may optionally be cooled at a rate of 20C per minute, or lower when the inherent furnace cooling rate is less, to room temperature. The furnace may optionally be brought to atmospheric pressure, opened and the brazed assembly may be removed for inspection, characterization and/or evaluation.

The cooling of the device can be optionally evened with the use of a heat conductive sleeve around the assembly. For example, the outside diameter of the ceramic piece may be 25.4 mm (1.00 inch). The ceramic piece may be oriented such that the hollow cavity is facing upwards. The ceramic piece may optionally be of alumina. An aluminum nitride sleeve may optionally be placed around the ceramic piece during brazing to contribute to maintaining a more even temperature of the ceramic piece, with aluminum within its cavity, during brazing and cooling. The AlN sleeve may optionally have an inside diameter of 35.1 mm (1.38 inches) and may optionally be slightly taller than the alumina ceramic piece.

Assemblies joined as described above can result in pieces with hermetic sealing between the aluminum in the ceramic hole feature and the interior surface of the ceramic hole. Such assemblies can then be used where atmosphere isolation is an important aspect in the use of the assemblies, as well as electrical isolation. Further, the portion of the joint which may be exposed to various atmospheres when the joined assemblies are later used in semi-conductor processing, for example, will likely not degrade in such atmospheres, nor will it likely contaminate the later semi-conductor processing.

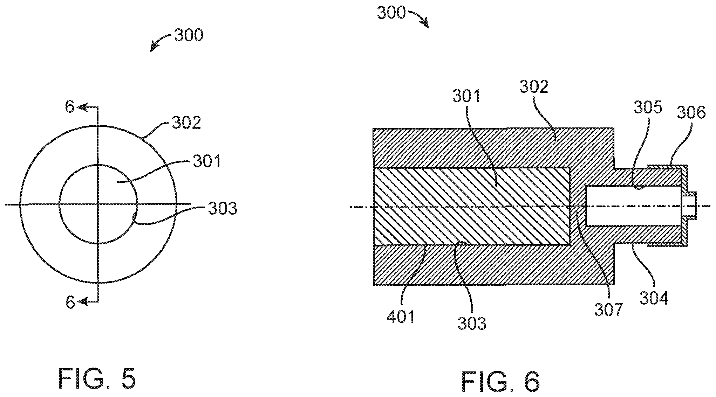

In an exemplary embodiment, as seen in FIGS. 4-8, a brazing assembly 300 represents an interim step in the manufacture of a completed electrical termination for a heater element is shown. Although this exemplary embodiment feeds through one aluminum tube, other embodiments may feed through more tubes.

The ceramic tube 302 may optionally have a blocking portion 307 which separates the hollow center 301 which will be filled with aluminum from a second hollow portion 305. A narrower outer surface 304 may also be seen at this end of the brazing assembly 300.

An optional cap 306 is seen around the narrower outer surface 304 of the brazing assembly. The cap 306 may optionally be a nickel cap. The nickel cap can optionally be brazed to the alumina ceramic narrower outer surface of the brazing assembly. The nickel cap may optionally be brazed onto the alumina during the same process step during which the aluminum is joined to the inner surface of the main hollow of the ceramic piece. The nickel cap may optionally be copper brazed at approximately 1100C, which is a temperature at which the aluminum may also be optionally brazed. The nickel cap can optionally be first brazed, and the aluminum brazed in a second brazing step at a lower temperature. The nickel cap may optionally be brazed to the ceramic, which may optionally be pre-metallized with a moly-manganese layer, using a copper braze. This first braze step may optionally take place at 1083C. The unit may then have the aluminum placed into the hollow of the ceramic piece, and optionally joined or brazed at a suitable temperature, for example 850C.

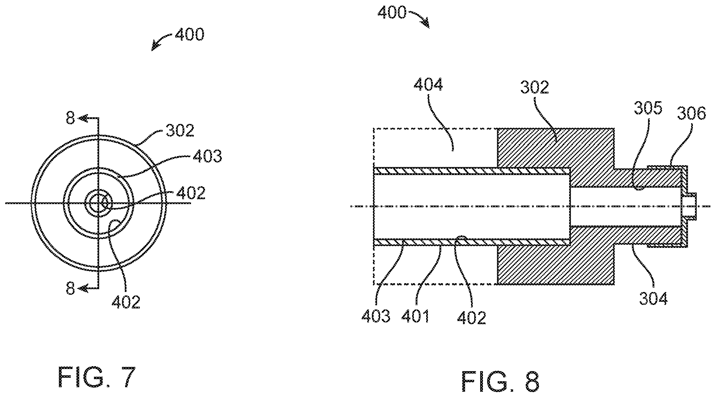

After the brazing process or processes, the brazing assembly 300 may optionally be moved along to become post-brazing assembly 400. A portion 404 of the ceramic tube, shown in dashed lines in FIG. 8, may be removed to expose the outer surface 401 of the aluminum which had been brazed into the ceramic tube. The center potion of the aluminum 301 may optionally be removed to form an aluminum tube 403. The blocking portion 307 may optionally be removed to allow a continuous passage 402 from within the aluminum tube 403 to the nickel cap 306.

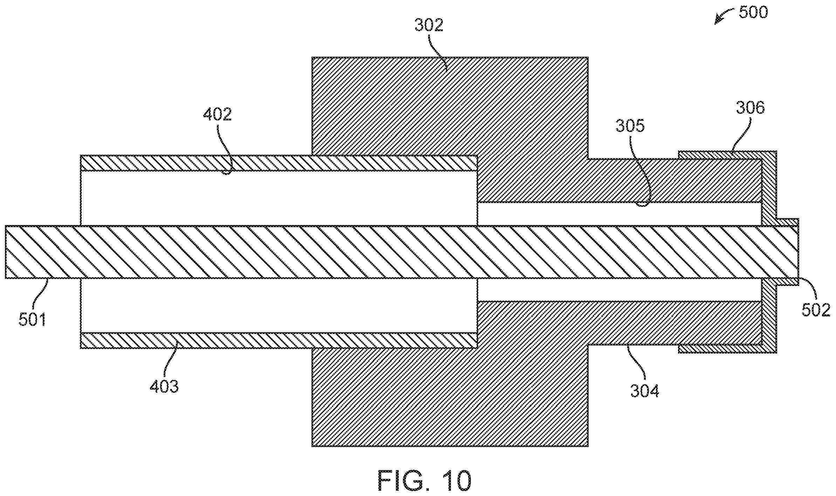

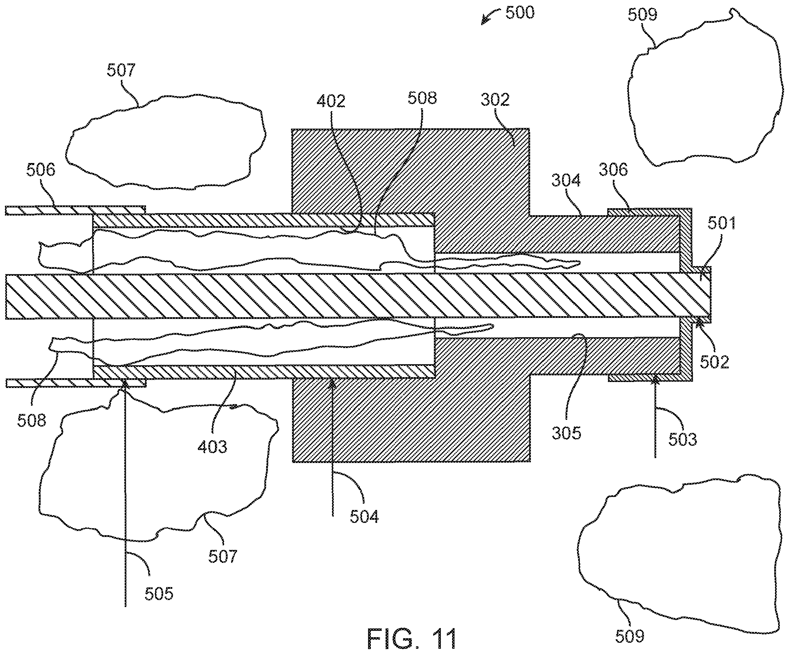

FIGS. 10 and 11, in cross-section, illustrate an exemplary single conductor electrical termination 500 after the insertion of a conductor 501 which may be welded 502 to the nickel cap 306. The conductor 501 may optionally be hermetically sheathed to protect the conductor, for example with an external sheath. The sheath may optionally then be hermetically joined to the inner or outer surface 401 of the aluminum tube. With the hermetic joining of the aluminum tube to the inner or outer surface 303 of the ceramic piece, the hermetic protection of the conductor 501 which is present in the sheathed conductor assembly is carried through into the ceramic piece, and with hermetic joining of the conductor at the nickel cap 306, the conductor has been hermetically sealed. The external ceramic surface of the electrical termination 500 may optionally be otherwise sealed such that the aluminum tube side of the electrical termination unit is isolated from the nickel cap side of the electrical termination unit.

FIG. 11 illustrates the electrical termination 500 with a sheath 506 joined to the aluminum tube with a hermetic joint 505. The sheath 506 may optionally be aluminum and the joint may optionally be a weld. The aluminum is brazed to the ceramic with a hermetic joint 504. At the end of the electrical termination, the optional nickel cap 306 is joined or brazed to the ceramic with a hermetic joint 503. The weld 502 of the nickel cap 306 to the conductor 501 is also hermetic. The series of hermetic joints isolates the atmosphere 508 within the sheath and within the ceramic plug from the atmospheres 507 and 509. Further, the ceramic electrically isolates the aluminum tube from the conductor 501 and the nickel cap 306. The electrical termination 500 may optionally be used within a vacuum chamber. In another embodiment, sheath 506 may optionally be joined to a wall of a vacuum chamber, which provides atmosphere 508, and optional cap 306 is disposed outside of the vacuum chamber.

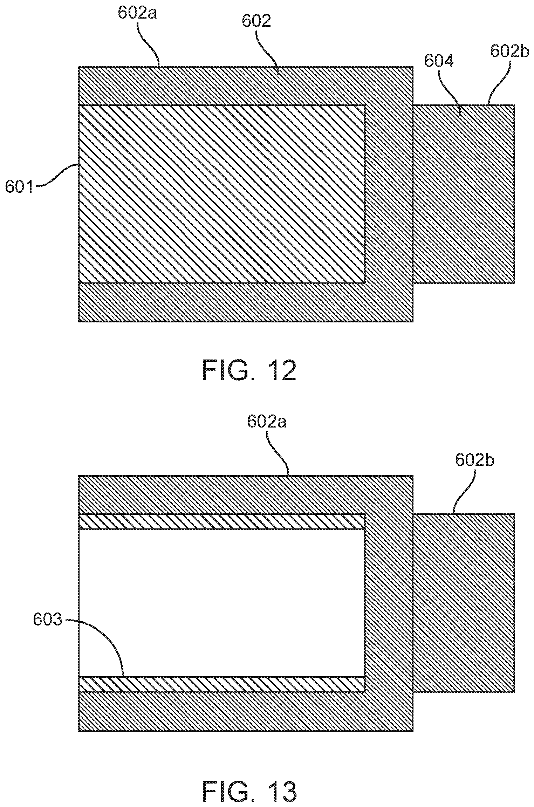

FIGS. 12-16 illustrate any exemplary method for the manufacture of an electrical connector of the invention, for example feedthrough 600. FIG. 12 illustrates an interim step with a ceramic piece 602, which may optionally be cylindrical in shape. The ceramic piece 602 may optionally be of a larger diameter in a first section or portion 602a, and may have a neckdown to a smaller diameter section or second portion 602b. The ceramic piece 602 may optionally have a hole, which may optionally be a cylindrical hole wherein an aluminum portion 601 has been brazed or joined, for example according to process steps as described above. The ceramic may optionally be alumina. The ceramic may optionally be aluminum nitride. The ceramic may optionally be a non-diffusing ceramic, for example as described above. The aluminum may optionally be greater than 98% aluminum by weight. The aluminum may optionally be greater than 99% aluminum by weight. The aluminum may optionally be greater than 99.9% aluminum by weight. At this stage, as seen in FIG. 12, the aluminum portion 601 has been brazed to the interior of the hole in the ceramic piece 602, and is now joined to the ceramic with a hermetic joint.

FIG. 13 illustrates a further step in the manufacture of a connector or feedthrough 600 of the present invention. At this stage, the center of the aluminum portion 601 has been removed to create an aluminum tube 603, as seen in cross-section in FIG. 13. The aluminum removed may be removed by any suitable mechanical machining techniques, or other appropriate methods. The outer surface of the aluminum tube 603 is hermetically joined to the inner surface of the ceramic piece 602.

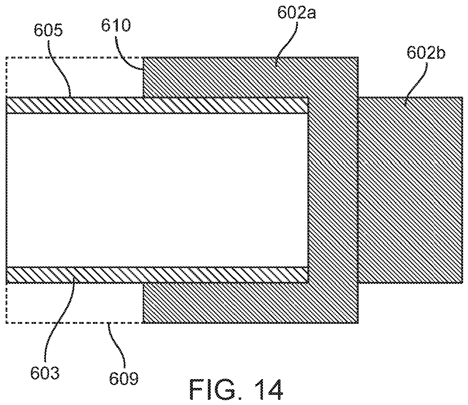

FIG. 14 illustrates a further step in the manufacture of a connector of feedthrough 600 of the present invention. At this stage, a segment 609 of the ceramic piece 602, shown in dashed lines, has been removed back to a point 610, which exposes an outer surface 605 of the aluminum tube 603. At this stage, there can now be an aluminum tube extending from a ceramic piece and a portion of the aluminum tube 603, for example an outer surface of the aluminum tube, is joined to the inner surface of a ceramic piece with a hermetic joint.

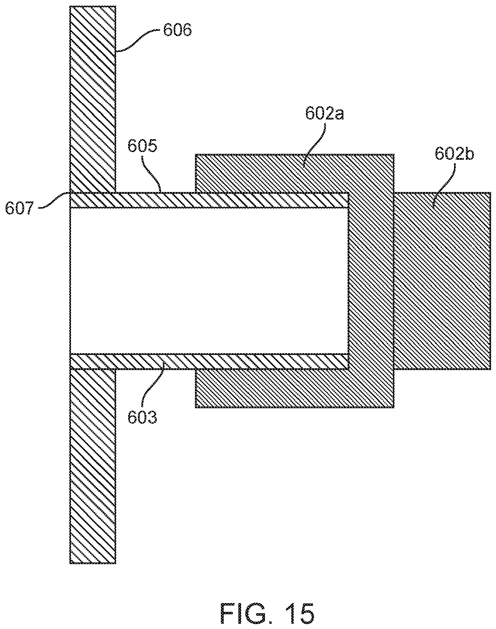

FIG. 15 illustrates a further step in the manufacture of a connector of feedthrough 600 of the present invention. At this stage, a flange 606 has been joined to the aluminum tube 603. The flange 606 may optionally be joined to the aluminum tube with a weld 607 around the outer periphery of the aluminum tube 603. The flange 606 may be adapted to mount to an interfacing feedthrough attach point on a wall 612 of a process chamber, for example. This construction now has a feedthrough flange hermetically coupled to an aluminum tube, which is hermetically joined to a ceramic piece. The ceramic piece electrically isolates items which may be routed through the ceramic plug from the mounting flange, and from the chamber wall 612 of the process chamber.

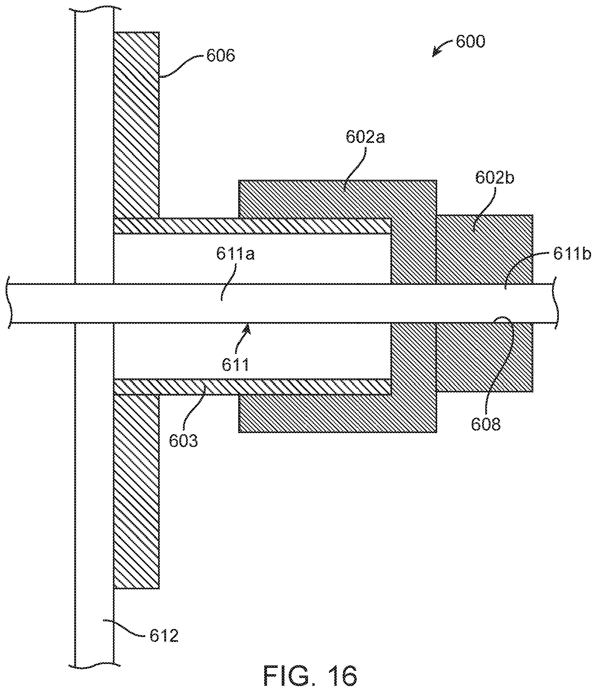

FIG. 16 illustrates a further step in the manufacture of a connector of feedthrough 600 of the present invention. At this stage, a passageway 608 has been created through the ceramic piece 602, which may allow for the passage of conductors or other items through the ceramic piece 602. An exemplary conductor 611 is shown, having a first end portion 611a extending through hollow structure or tube 603 and a second end portion 611b extending through passageway 608. Conductor 611 is affixed within passageway 608, and thus ceramic piece 602, by any suitable manner. There may optionally be more than one passageway 608 and more than one conductor 611. The passageway or passageways may optionally be created at an earlier stage in the manufacturing process. Items such as conductors which utilize the passageways may optionally be affixed to the ceramic plug during an earlier stage of manufacture.

An electrical feedthrough for use with a vacuum chamber is provided and includes a ceramic body having a first end and a second end a bore extending through the first end and formed by an inner surface of the ceramic body, a hollow aluminum structure having a first portion extending into the bore and brazed to the inner surface to form a hermetic seal between the hollow aluminum structure and the ceramic body, the hollow aluminum structure having a second portion extending from the ceramic body, and an electrical conductor having a first end portion extending through the hollow aluminum structure and a second end portion extending to the second end of the ceramic body.

The electrical feedthrough can optionally include a metal end cap joined to the second end of the ceramic body, the second end portion of the electrical conductor being joined to the end cap. The second end of the ceramic body can optionally be provided with an additional bore extending therethrough and communicating with the first-named bore, the second end portion of the electrical conductor being joined to the second end of the ceramic body within the additional bore. The hollow aluminum structure can optionally be an aluminum tube. The ceramic body can optionally be annular and provided with a central longitudinal axis and the bore is axially centered on the central longitudinal axis. The aluminum of the hollow aluminum structure can optionally be aluminum greater than 89% aluminum by weight. The aluminum of the hollow aluminum structure can optionally be aluminum greater than 92% aluminum by weight. The aluminum of the hollow aluminum structure can optionally be aluminum greater than 98% by weight. The aluminum of the hollow aluminum structure can optionally be aluminum greater than 99% aluminum by weight. The aluminum of the hollow aluminum structure can optionally be aluminum greater than 99.5% aluminum by weight. The aluminum of the hollow aluminum structure can optionally be aluminum greater than 99.99% aluminum by weight. The electrical feedthrough can optionally be a termination unit. The second portion of the hollow aluminum structure can optionally be joined to a flange configured to hermetically couple to a chamber wall of a vacuum chamber.

A method for the making an insulated electrical feedthrough or electrical termination unit is provided and includes providing a ceramic piece have a first end and a second end and a hole extending into the ceramic piece from the first end and formed from an inner surface, putting aluminum into the hole, brazing the aluminum in the hole to create an aluminum structure within the hole that is hermetically joined with the inner surface of the hole and has a central portion, removing the central portion of the aluminum structure to create a passageway through the aluminum structure, and removing a portion of the ceramic piece around the aluminum structure at the first end to expose an outer surface of a portion of the aluminum structure, thereby resulting in a hollow aluminum structure hermetically joined to the inner surface of the ceramic piece and extending from the first end of the ceramic piece.

The method includes providing at least one electrical conductor extending through the hollow aluminum structure. The at least one electrical conductor is electrically isolated from the hollow aluminum structure. The ceramic piece can optionally be annular, and the method can optionally include brazing an end cap to the second end of the annular ceramic piece and joining an end of the at least one electrical conductor to the end cap. The aluminum structure can optionally be an aluminum rod. The hollow aluminum structure can optionally be an aluminum tube. The brazing step can optionally include brazing the aluminum at a temperature of 770C or greater. The brazing step can optionally include brazing the aluminum at a temperature of 800C or greater. The brazing step can optionally include brazing the aluminum at a temperature in the range of 770C to 1200C. The brazing step can optionally include brazing the aluminum at a pressure of 0.133Pa (1 x 10E-4 Torr) or lower. The brazing step can optionally include brazing the aluminum at a pressure of 0.067Pa (5 x 10E-5 Torr) or lower. The aluminum can optionally be aluminum greater than 89% aluminum by weight. The aluminum can optionally be aluminum greater than 92% aluminum by weight. The aluminum can optionally be aluminum greater than 98% by weight. The aluminum can optionally be aluminum greater than 99% aluminum by weight. The aluminum can optionally be aluminum greater than 99.5% aluminum by weight. The aluminum can optionally be aluminum greater than 99.99% aluminum by weight.

A method for the making an insulated electrical feedthrough or electrical termination unit is provided and includes the steps of putting aluminum into a hole in a ceramic piece, said ceramic piece having a first end and a second end, said hole in said ceramic piece entering said ceramic piece at the first end, brazing the aluminum to create an aluminum rod within the ceramic piece joined with a hermetic joint between the aluminum and the inner surface of the hole in the ceramic piece, removing the center of the aluminum rod to create an aluminum tube within said ceramic piece, and removing a portion of the ceramic piece at said first end of said ceramic piece to expose a portion of the outer surface of the aluminum tube, thereby resulting in an aluminum tube with a portion of said aluminum tube hermetically joined along the exterior of said aluminum tube to the interior of said hole within said ceramic piece, within the center of the annular ceramic piece at a first end.

The method can optionally include brazing an end cap to the second end of said annular ceramic piece. The method can optionally include affixing a conductor through said feed through. The brazing step can optionally include brazing the aluminum at a temperature of 770C or greater. The brazing step can optionally include brazing the aluminum at a temperature of 800C or greater. The brazing step can optionally include brazing the aluminum at a temperature in the range of 770C to 1200C. The brazing step can optionally include brazing at a pressure of 0.133Pa (1 x 10E-4 Torr) or lower. The brazing step can optionally include brazing at a pressure of 0.067Pa (5 x 10E-5 Torr) or lower. The aluminum can optionally include aluminum of greater than 98% aluminum by weight. The aluminum can optionally include aluminum of greater than 99% aluminum by weight.

As evident from the above description, a wide variety of embodiments may be configured from the description given herein and additional advantages and modifications will readily occur to those skilled in the art. The invention in its broader aspects is, therefore, not limited to the specific details and illustrative examples shown and described. Accordingly, departures from such details may be made without departing from the scope of the claims.

## Claims

1. An electrical feedthrough for use with a vacuum chamber, comprising a ceramic body (302, 602) having a first end (602a) and a second end (602b) and a bore extending through the first end (602a) and formed by an inner surface of the ceramic body (302, 602), a hollow aluminum structure (403, 603) having a first portion extending into the bore and brazed to the inner surface to form a hermetic seal between the hollow aluminum structure (403, 603) and the ceramic body (302, 602), the hollow aluminum structure (403, 603) having a second portion extending from the ceramic body (302, 602), and an electrical conductor (501, 611) having a first end portion extending through the hollow aluminum structure (403, 603) and a second end portion extending to the second end of the ceramic body (302, 602), the electrical conductor (501, 611) being electrically isolated from the hollow aluminum structure (403, 603).

2. The electrical feedthrough of Claim 1, further comprising a metal end cap (306) joined to the second end of the ceramic body (302), the second end portion of the electrical conductor (501) being joined to the end cap (306).

3. The electrical feedthrough of Claim 1, wherein the second end of the ceramic body (302, 602) is provided with an additional bore (305, 608) extending therethrough and communicating with the first-named bore, the second end portion of the electrical conductor (501, 611) being joined to the second end of the ceramic body (302, 602) within the additional bore (305, 608).

4. The electrical feedthrough of any one of Claims 1 to 3, wherein the hollow aluminum structure (403, 603) is an aluminum tube.

5. The electrical feedthrough of any one of Claims 1 to 3, wherein the ceramic body (302, 602) is annular and provided with a central longitudinal axis and the bore is axially centered on the central longitudinal axis.

6. The electrical feedthrough of any one of Claims 1 to 3, wherein the aluminum of the hollow aluminum structure (403, 603) includes aluminum selected from the group consisting of aluminum greater than 89% aluminum by weight, aluminum greater than 92% aluminum by weight, aluminum greater than 98% by weight, aluminum greater than 99% aluminum by weight, aluminum greater than 99.5% aluminum by weight and aluminum greater than 99.99% aluminum by weight.

7. The electrical feedthrough of any one of Claims 1 to 3, wherein the electrical feedthrough is a termination unit.

8. The electrical feedthrough of any one of Claims 1 and 3 for use with a vacuum chamber having a chamber wall (612), wherein the second portion of the hollow aluminum structure (603) is joined to a flange (606) configured to hermetically couple to the chamber wall (612).

9. The electrical feedthrough of any one of claims 1 to 8, wherein the hollow aluminum structure (403, 603) does not extend into the second end (602b) of the ceramic body (302, 602).

10. A method for the making an insulated electrical feedthrough (600) or electrical termination unit (500), comprising providing a ceramic piece (302, 602) have a first end (602a) and a second end (602b) and a hole extending into the ceramic piece (302, 602) from the first end (602a) and formed from an inner surface, putting aluminum into the hole, brazing the aluminum in the hole to create an aluminum structure (403, 603) within the hole that is hermetically joined with the inner surface of the hole and has a central portion, removing the central portion of the aluminum structure (403, 603) to create a passageway through the aluminum structure (401, 601), removing a portion of the ceramic piece (302, 602) around the aluminum structure (403, 603) at the first end to expose an outer surface of a portion of the aluminum structure (403, 603), thereby resulting in a hollow aluminum structure (403, 603) hermetically joined to the inner surface of the ceramic piece (302, 602) and extending from the first end of the ceramic piece (302, 602) and providing at least one electrical conductor (501, 611) extending through the hollow aluminum structure (403, 603), wherein the at least one electrical conductor (501, 611) is electrically isolated from the hollow aluminum structure (403, 603).

11. The method of Claim 10, wherein the ceramic piece (302) is annular, further comprising brazing an end cap (306) to the second end of the annular ceramic piece (302) and joining an end of the at least one electrical conductor (501) to the end cap.

12. The method of Claim 10, wherein the hollow aluminium structure (403, 603) is an aluminum rod.

13. The method of Claim 12, wherein the hollow aluminum structure (403, 603) is an aluminum tube.

14. The method of any one of Claims 10 to 13, wherein the brazing step includes brazing the aluminum at a temperature selected from the group consisting of 770C or greater, 800C or greater and in the range of 770C to 1200C.

15. The method of any one of Claims 10 to 13, wherein the brazing step includes brazing the aluminum at a pressure selected from the group consisting of 0.133Pa (1 × 10E-4 Torr) or lower and 0.067Pa (5 × 10E-5 Torr) or lower.

16. The method of any one of Claims 10 to 13, wherein the aluminum includes aluminum selected from the group consisting of aluminum greater than 89% aluminum by weight, aluminum greater than 92% aluminum by weight, aluminum greater than 98% by weight, aluminum greater than 99% aluminum by weight, aluminum greater than 99.5% aluminum by weight and aluminum greater than 99.99% aluminum by weight.

17. The method of any one of claim 10 to 16, wherein the hollow aluminum structure (403, 603) does not extend into the second end (602b) of the ceramic body (302, 602).

## Patentansprüche

1. Elektrische Durchführung zur Verwendung mit einer Vakuumkammer, umfassend einen Keramikkörper (302, 602), welcher ein erstes Ende (602a) und ein zweites Ende (602b) und eine Bohrung aufweist, welche sich durch das erste Ende (602a) erstreckt und durch eine innere Fläche des Keramikkörpers (302, 602) gebildet ist, eine hohle Aluminiumstruktur (403, 603), welche einen ersten Abschnitt aufweist, welcher sich in die Bohrung erstreckt und an die innere Fläche gelötet ist, um eine hermetische Dichtung zwischen der hohlen Aluminiumstruktur (403, 603) und dem Keramikkörper (302, 602) zu bilden, wobei die hohle Aluminiumstruktur (403, 603) einen zweiten Abschnitt aufweist, welcher sich von dem Keramikkörper (302, 602) erstreckt, und einen elektrischen Leiter (501, 611), welcher einen ersten Endabschnitt, der sich durch die hohle Aluminiumstruktur (403, 603) erstreckt, und einen zweiten Endabschnitt aufweist, der sich zu dem zweiten Ende des Keramikkörpers (302, 602) erstreckt, wobei der elektrische Leiter (501, 611) elektrisch von der hohlen Aluminiumstruktur (403, 603) isoliert ist.

2. Elektrische Durchführung nach Anspruch 1, ferner umfassend eine Metallendkappe (306), welche mit dem zweiten Ende des Keramikkörpers (302) verbunden ist, wobei der zweite Endabschnitt des elektrischen Leiters (501) mit der Endkappe (306) verbunden ist.

3. Elektrische Durchführung nach Anspruch 1, wobei das zweite Ende des Keramikkörpers (302, 602) mit einer zusätzlichen Bohrung (305, 608) bereitgestellt ist, welche sich dadurch erstreckt und mit der zuerst genannten Bohrung in Verbindung steht, wobei der zweite Endabschnitt des elektrischen Leiters (501, 611) innerhalb der zusätzlichen Bohrung (305, 608) mit dem zweiten Ende des Keramikkörpers (302, 602) verbunden ist.

4. Elektrische Durchführung nach einem der Ansprüche 1 bis 3, wobei die hohle Aluminiumstruktur (403, 603) ein Aluminiumrohr ist.

5. Elektrische Durchführung nach einem der Ansprüche 1 bis 3, wobei der Keramikkörper (302, 602) ringförmig ist und mit einer Mittellängsachse bereitgestellt ist und wobei die Bohrung axial auf der Mittellängsachse zentriert ist.

6. Elektrische Durchführung nach einem der Ansprüche 1 bis 3, wobei das Aluminium der hohlen Aluminiumstruktur (403, 603) ein Aluminium umfasst, ausgewählt aus der Gruppe, bestehend aus Aluminium mit mehr als 89 Gew.-% Aluminium, Aluminium mit mehr als 92 Gew.-% Aluminium, Aluminium mit mehr als 98 Gew.-% Aluminium, Aluminium mit mehr als 99 Gew.-% Aluminium, Aluminium mit mehr als 99,5 Gew.-% Aluminium und Aluminium mit mehr als 99,99 Gew.-% Aluminium.

7. Elektrische Durchführung nach einem der Ansprüche 1 bis 3, wobei die elektrische Durchführung eine Anschlusseinheit ist.

8. Elektrische Durchführung nach einem der Ansprüche 1 bis 3 zur Verwendung mit einer Vakuumkammer, welche eine Kammerwand (612) aufweist, wobei der zweite Abschnitt der hohlen Aluminiumstruktur (603) mit einem Flansch (606) verbunden ist, welcher dazu eingerichtet ist, hermetisch mit der Kammerwand (612) gekoppelt zu sein.

9. Elektrische Durchführung nach einem der Ansprüche 1 bis 8, wobei sich die hohle Aluminiumstruktur (403, 603) nicht in das zweite Ende (602b) des Keramikkörpers (302, 602) erstreckt.

10. Verfahren zur Herstellung einer isolierten elektrischen Durchführung (600) oder einer elektrischen Anschlusseinheit (500), umfassend Bereitstellen eines Keramikstücks (302, 602) mit einem ersten Ende (602a) und einem zweiten Ende (602b) und einem Loch, welches sich von dem ersten Ende (602a) in das Keramikstück (302, 602) erstreckt und von einer inneren Fläche gebildet ist, Geben von Aluminium in das Loch, Löten des Aluminiums in dem Loch, um innerhalb des Lochs eine Aluminiumstruktur (403, 603) zu erzeugen, welche hermetisch mit der inneren Fläche des Lochs verbunden ist und einen zentralen Abschnitt aufweist, Entfernen des zentralen Abschnitts der Aluminiumstruktur (403, 603), um einen Durchgang durch die Aluminiumstruktur (401, 601) zu erzeugen, Entfernen eines Abschnitts des Keramikstücks (302, 602) um die Aluminiumstruktur (403, 603) an dem ersten Ende herum, um eine äußere Fläche eines Abschnitts der Aluminiumstruktur (403, 603) freizulegen, wodurch eine hohle Aluminiumstruktur (403, 603) resultiert, welche hermetisch mit der inneren Fläche des Keramikstücks (302, 602) verbunden ist und sich von dem ersten Ende des Keramikstücks (302, 602) erstreckt, und Bereitstellen wenigstens eines elektrischen Leiters (501, 611), welcher sich durch die hohle Aluminiumstruktur (403, 603) erstreckt, wobei der wenigstens eine elektrische Leiter (501, 611) elektrisch von der hohlen Aluminiumstruktur (403, 603) isoliert ist.

11. Verfahren nach Anspruch 10, wobei das Keramikstück (302) ringförmig ist, ferner umfassend Löten einer Endkappe (306) an das zweite Ende des ringförmigen Keramikstücks (302) und Verbinden eines Endes des wenigstens einen elektrischen Leiters (501) mit der Endkappe.

12. Verfahren nach Anspruch 10, wobei die hohle Aluminiumstruktur (403, 603) eine Aluminiumstange ist.

13. Verfahren nach Anspruch 12, wobei die hohle Aluminiumstruktur (403, 603) ein Aluminiumrohr ist.

14. Verfahren nach einem der Ansprüche 10 bis 13, wobei der Lötschritt ein Löten des Aluminiums bei einer Temperatur umfasst, ausgewählt aus der Gruppe, bestehend aus 770 °C oder höher, 800 °C oder höher und in dem Bereich von 770 °C bis 1200 °C.

15. Verfahren nach einem der Ansprüche 10 bis 13, wobei der Lötschritt ein Löten des Aluminiums bei einem Druck umfasst, ausgewählt aus der Gruppe, bestehend aus 0,133 Pa (1 × 10E-4 Torr) oder niedriger und 0,067 Pa (5 × 10E-5 Torr) oder niedriger.

16. Verfahren nach einem der Ansprüche 10 bis 13, wobei das Aluminium ein Aluminium umfasst, ausgewählt aus der Gruppe, bestehend aus Aluminium mit mehr als 89 Gew.-% Aluminium, Aluminium mit mehr als 92 Gew.-% Aluminium, Aluminium mit mehr als 98 Gew.-% Aluminium, Aluminium mit mehr als 99 Gew.-% Aluminium, Aluminium mit mehr als 99,5 Gew.-% Aluminium und Aluminium mit mehr als 99,99 Gew.-% Aluminium.

17. Verfahren nach einem der Ansprüche 10 bis 16, wobei sich die hohle Aluminiumstruktur (403, 603) nicht in das zweite Ende (602b) des Keramikkörpers (302, 602) erstreckt.

## Revendications

1. Traversée électrique à utiliser avec une chambre à vide, comprenant un corps en céramique (302, 602) présentant une première extrémité (602a) et une seconde extrémité (602b) et un alésage s'étendant à travers la première extrémité (602a) et formé par une surface interne du corps en céramique (302, 602), une structure creuse en aluminium (403, 603) présentant une première partie s'étendant dans l'alésage et brasée à la surface interne pour former un joint d'étanchéité hermétique entre la structure creuse en aluminium (403, 603) et le corps en céramique (302, 602), la structure creuse en aluminium (403, 603) présentant une seconde partie s'étendant à partir du corps en céramique (302, 602), et un conducteur électrique (501, 611) présentant une première partie d'extrémité s'étendant à travers la structure creuse en aluminium (403, 603) et une seconde partie d'extrémité s'étendant vers la seconde extrémité du corps en céramique (302, 602), le conducteur électrique (501, 611) étant isolé électriquement de la structure creuse en aluminium (403, 603).

2. Traversée électrique selon la revendication 1, comprenant en outre un capuchon d'extrémité métallique (306) joint à la seconde extrémité du corps en céramique (302), la seconde partie d'extrémité du conducteur électrique (501) étant jointe au capuchon d'extrémité (306).

3. Traversée électrique selon la revendication 1, dans laquelle la seconde extrémité du corps en céramique (302, 602) est pourvue d'un alésage supplémentaire (305, 608) s'étendant à travers celle-ci et communiquant avec l'alésage nommé en premier, la seconde partie d'extrémité du conducteur électrique (501, 611) étant jointe à la seconde extrémité du corps en céramique (302, 602) à l'intérieur de l'alésage supplémentaire (305, 608).

4. Traversée électrique selon l'une quelconque des revendications 1 à 3, dans laquelle la structure creuse en aluminium (403, 603) est un tube en aluminium.

5. Traversée électrique selon l'une quelconque des revendications 1 à 3, dans laquelle le corps en céramique (302, 602) est annulaire et pourvu d'un axe longitudinal central et l'alésage est centré axialement sur l'axe longitudinal central.

6. Traversée électrique selon l'une quelconque des revendications 1 à 3, dans laquelle l'aluminium de la structure creuse en aluminium (403, 603) inclut de l'aluminium choisi dans le groupe constitué d'aluminium à plus de 89 % d'aluminium en poids, d'aluminium à plus de 92 % d'aluminium en poids, d'aluminium à plus de 98 % en poids, d'aluminium à plus de 99 % d'aluminium en poids, d'aluminium à plus de 99,5 % d'aluminium en poids et d'aluminium à plus de 99,99 % d'aluminium en poids.

7. Traversée électrique selon l'une quelconque des revendications 1 à 3, dans laquelle la traversée électrique est une unité de terminaison.

8. Traversée électrique selon l'une quelconque des revendications 1 et 3, à utiliser avec une chambre à vide présentant une paroi de chambre (612), dans laquelle la seconde partie de la structure creuse en aluminium (603) est reliée à une bride (606) configurée pour être couplée de manière hermétique à la paroi de chambre (612).

9. Traversée électrique selon l'une quelconque des revendications 1 à 8, dans laquelle la structure creuse en aluminium (403, 603) ne s'étend pas dans la seconde extrémité (602b) du corps en céramique (302, 602).

10. Procédé de fabrication d'une traversée électrique isolée (600) ou d'une unité de terminaison électrique (500), comprenant les étapes consistant à fournir une pièce en céramique (302, 602) présentant une première extrémité (602a) et une seconde extrémité (602b) et un trou s'étendant dans la pièce en céramique (302, 602) à partir de la première extrémité (602a) et formée à partir d'une surface interne, mettre de l'aluminium dans le trou, braser l'aluminium dans le trou pour créer une structure en aluminium (403, 603) à l'intérieur du trou qui est hermétiquement jointe à la surface intérieure du trou et présente une partie centrale, retirer la partie centrale de la structure en aluminium (403, 603) pour créer un passage à travers la structure en aluminium (401, 601), retirer une partie de la pièce en céramique (302 602) autour de la structure en aluminium (403, 603) au niveau de la première extrémité pour exposer une surface externe d'une partie de la structure en aluminium (403, 603), résultant ainsi en une structure creuse en aluminium (403, 603) assemblée de manière hermétique à la surface interne de la pièce en céramique (302, 602) et s'étendant à partir de la première extrémité de la pièce en céramique (302, 602) et fournissant au moins un conducteur électrique (501, 611) s'étendant à travers la structure creuse en aluminium (403, 603), dans lequel le au moins un conducteur électrique (501, 611) est isolé électriquement de la structure creuse en aluminium (403, 603).

11. Procédé selon la revendication 10, dans lequel la pièce en céramique (302) est annulaire, comprenant en outre le brasage d'un capuchon d'extrémité (306) à la seconde extrémité de la pièce en céramique annulaire (302) et la jonction d'une extrémité du au moins un conducteur électrique (501) au capuchon d'extrémité.

12. Procédé selon la revendication 10, dans lequel la structure creuse en aluminium (403, 603) est une tige d'aluminium.

13. Procédé selon la revendication 12, dans lequel la structure creuse en aluminium (403, 603) est un tube en aluminium.

14. Procédé selon l'une quelconque des revendications 10 à 13, dans lequel l'étape de brasage comprend le brasage de l'aluminium à une température choisie dans le groupe comprenant 770°C ou plus, 800°C ou plus et dans la plage de 770°C à 1 200°C.

15. Procédé selon l'une quelconque des revendications 10 à 13, dans lequel l'étape de brasage comprend le brasage de l'aluminium à une pression choisie dans le groupe constitué de 0,133 Pa (1 × 10E-4 Torr ou moins et 0,067 Pa (5 ×10E-5 Torr) ou moins.

16. Procédé selon l'une quelconque des revendications 10 à 13, dans lequel l'aluminium inclut de l'aluminium choisi dans le groupe constitué d'aluminium à plus de 89 % d'aluminium en poids, d'aluminium à plus de 92 % d'aluminium en poids, d'aluminium à plus de 98 % d'aluminium en poids, d'aluminium à plus de 99 % d'aluminium en poids, d'aluminium à plus de 99,5 % d'aluminium en poids et d'aluminium à plus de 99,99 % d'aluminium en poids.

17. Procédé selon l'une quelconque des revendications 10 à 16, dans lequel la structure creuse en aluminium (403, 603) ne s'étend pas dans la seconde extrémité (602b) du corps en céramique (302, 602).
